# FASCICULE DE BREVET EUROPEEN

(11) **EP 3 320 052 B1**
(45) Date de publication et mention de la délivrance du brevet: **11.06.2025**
(21) Numéro de dépôt: 16747807.2
(22) Date de dépôt: 05.07.2016
(51) Int. Cl.: C09J 7/40, C09D 183/06

(54) **ARTICLE MULTICOUCHE AUTO-ADHÉSIF ET SON PROCÉDÉ DE PRÉPARATION**
SELBSTHAFTENDER MEHRSCHICHTIGER ARTIKEL UND VERFAHREN ZUR HERSTELLUNG DAVON
SELF-ADHESIVE MULTI-LAYER ITEM AND METHOD FOR THE PRODUCTION THEREOF

(30) Priorité: 06.07.2015 FR 1501424
(43) Date de publication de la demande: 16.05.2018
(73) Titulaire: ELKEM SILICONES France SAS, 69003 Lyon (FR)
(72) Inventeur: HOOVER, Jeffrey, Rock Hill, SC 29731 (US); PIBRE, Guillaume, 63190 Lezoux (FR)
(74) Mandataire: Garcia Escomel, Cristina
(86) Numéro de dépôt international: PCT/FR2016/000113
(87) Numéro de publication internationale: WO 2017/005992

(56) Documents cités:
- EP-A1- 0 006 705
- WO-A1-2013/013568
- US-A1- 2013 300 010

## Description

Le domaine de l'invention est celui des articles multicouches auto-adhésifs et leurs procédés de fabrication et plus particulièrement des articles multicouches auto-adhésifs dans lesquels une matrice silicone réticulée ou polymérisée est associée à un adhésif.

Une structure article multicouches auto-adhésif classique comprend un stratifié d'un matériau support frontal, une couche d'adhésif, le plus souvent une couche d'adhésif sensible à la pression, et un matériau support dorsal rendu anti-adhérent par l'enduction d'un revêtement spécifique.

Le support frontal peut-être de nature très varié, mais il est habituellement en papier ou en matière plastique. Le matériau support dorsal rendu anti-adhérent permet la séparation par pelage de la partie adhésive du support dorsal. Ceci est particulièrement utilisé dans le cas des étiquettes, rubans ou autres dispositifs auto-adhésifs.

Pour le support dorsal, un revêtement, le plus souvent une matrice en silicone, est appliquée à la surface d'un support puis réticulée de manière à le rendre anti-adhérent vis à vis de l'adhésif. Ainsi, les deux composantes principales sont:
- le matériau support qui est le plus souvent sous forme de papier ou de film en plastique. Il soutient physiquement, au début et après, le processus d'application et de formation d'une couche uniforme de matériau avec des propriétés antiadhésives. Pour des raisons économiques, la quantité de matériau couché doit être minimisée et cette condition est réalisable avec un substrat qui garde en surface la plupart du matériau couché, et
- le revêtement antiadhésif. Il fournit une très faible énergie libre de surface, presque entièrement de nature dispersive, sur le côté couché. L'élastomère silicone réticulé est le matériau universellement utilisé pour créer une couche aux propriétés antiadhésives requises.

Le support dorsal a comme rôle de supporter l'article multicouche auto-adhésif en soi pendant sa production et de protéger la couche adhésive contre des impuretés, de telle manière qu'il puisse traverser les processus de transformation tels que par exemple lorsqu'il s'agit d'une étiquette : l'impression, la découpe, la coupe, la perforation etc.

L'adhésif utilisé dans ce type de produit est le plus souvent un adhésif sensible à la pression (également dénommé colle auto-adhésive ou encore, en anglais, "Pressure Sensitive Adhésive" ou PSA) qui confère au support qui en est revêtu un pouvoir collant immédiat à température ambiante (souvent désigné sous le terme de "tack"), lequel permet son adhésion instantanée à un substrat sous l'effet d'une pression légère et brève.

Ces articles multicouches auto-adhésifs peuvent être préparés selon un procédé dit « in line » qui implique les étapes successives comprenant notamment le dépôt d'une composition organopolysiloxane réticulable et/ou polymérisable sur un matériau de type support, sa réticulation et/ou polymérisation par apport d'énergie de manière à former un revêtement silicone anti-adhérent, l'application sur ce revêtement d'un adhésif généralement sous la forme d'une émulsion aqueuse, le séchage de cette émulsion et l'application d'un second support. En pratique, le taux de dépôt d'une composition organopolysiloxane réticulable et/ou polymérisable est compris entre 0,1 et 5 g/m² ce qui correspond à des épaisseurs de l'ordre du micromètre pour 1g/m².

L'article multicouche auto-adhésif ainsi formé est ensuite généralement stocké pour une durée plus ou moins prolongée sur des bobines. Ce type d'articles multicouches auto-adhésifs est plus particulièrement utilisé pour la réalisation de papiers protecteurs adhésifs tels les étiquettes, papiers décoratifs et rubans adhésifs. Le système multicouche obtenu est généralement conditionné par enroulement sous forme de larges bobines ayant jusqu'à 2 m de largeur et 1 m de diamètre, qui peuvent être ainsi stockées et transportées.

Les revêtements silicone anti-adhérents à base de silicone durcissable et en particulier par irradiation destinés à se détacher d'adhésifs sensibles à la pression sont donc bien connus. Dans les années 1980, deux systèmes à base de silicone durcissables par irradiation sont apparus sur le marché. Un système était un système de copolymère acrylate/silicone durcissable par un mécanisme radicalaire sous irradiation à la fois par des rayons ultraviolets et des faisceaux électroniques. Ces systèmes sont décrits, par exemple, dans les brevets des Etats-Unis d'Amérique n° 4 201 808 ; 4 568 566 ; 4 678 846 ; 5 494 979 ; 5 510 190 ; 5 552 506 ; 5 804 301 ; 5 891 530 et 5 977 282.

L'autre système était un système durcissable par les rayons ultraviolets, durcissant par un mécanisme cationique et à base de polymères silicones à fonction époxy. Les systèmes de polymères silicones à fonction époxy sont décrits, par exemple, dans les brevets des Etats-Unis d'Amérique n° 4 421 904 ; 4 547 431 ; 4 952 657 ; 5 217 805 ; 5 279 860 ; 5 310 601 ; 5 340 898 ; 5 360 833 ; 5 650 453 ; 5 866 264 et 5 973 020.

Compte tenu des cadences industrielles d'enduction, la cinétique de réticulation doit être très rapide pour conduire à une réticulation correcte, c'est-à-dire que la couche constituée d'un élastomère silicone anti-adhérent doit être suffisamment réticulée pour pouvoir remplir au mieux sa fonction d'anti-adhérence et posséder les qualités mécaniques souhaitables. L'appréciation de la qualité de la réticulation de la couche en silicone anti-adhérent peut notamment se faire au travers du dosage des composés extractibles non réticulés, dont la quantité doit être la plus réduite possible. Par exemple, le taux d'extractibles est préférablement inférieur à 8%, dans des conditions industrielles normales de réticulation.

L'anti-adhérence de la face externe libre du revêtement silicone s'exprime au travers de la force de décollement, qui doit être faible et contrôlée, pour l'élément destiné à être disposé sur le support revêtu par la couche constituée d'un élastomère silicone anti-adhérent. Classiquement, cet élément peut être la face adhésive d'une étiquette ou d'un ruban du même nom.

Ainsi, outre cette anti-adhérence faible et contrôlée, l'adhérence du revêtement silicone sur son support doit être très élevée. Cette propriété d'adhérence s'apprécie par exemple à l'aide du test de métier de "rub off", qui consiste à frotter la surface du revêtement avec le doigt et à mesurer le nombre de passages successifs qui conduisent à une dégradation du revêtement.

Les supports dorsaux revêtus d'un film silicone anti-adhérent peuvent être par exemple:
- un papier ou un film polymère de protection de la face adhésive d'un élément autocollant ou adhésif sensible à la pression ; ou
- un film polymère du type polyoléfine (polychlorure de vinyle (PVC), Polypropylène ou Polyéthylène) ou de type polyester).

Des compositions silicones anti-adhérentes, durcissables sont appliquées sur de tels supports, de manière à faciliter l'enlèvement de matières adhésives contrecollées de manière réversible sur ces supports. Des formulations réticulables par polymérisation radicalaire peuvent être utilisées. Elles sont principalement constituées d'un polyorganosiloxane fonctionnalisé acrylate et d'un photoamorceur.

Les photoamorceurs radicalaires sont entre autres des cétones aromatiques qui après une exposition sous un rayonnement ultra-violet (UV):
- subissent une scission homolytique en position α de la fonction carbonyle avec formation de deux fragments radicalaires, dont l'un est un radical benzoyle (photoamorceurs de type I), ou
- forment des radicaux libres lorsqu'ils sont promus dans leurs états excités par arrachement d'hydrogène d'une molécule donneur d'hydrogène (plus communément désigné par le terme « co-amorceur ») ce qui conduit à la formation d'un radical cétyle inactif et d'un radical amorceur issu du donneur correspondant (photoamorceurs de type II).

Comme exemple de photoamorceurs de type II on peut citer l'isopropylthioxanthone (ITX), la benzophénone et la camphorquinone (CQ). Comme exemple de co-amorceur on peut citer: le phényltétrazolethiol, le tris(triméthylsilyl)silane et les amines aromatiques telles que l'éthyldiméthylaminobenzoate (EDB).

Comme exemple de photoamorceurs de type I on peut citer : les α-hydroxycétones, les benzoïnes éther, les cétones α-amino aromatiques.

Comme art antérieur, nous pouvons citer les brevets accordés FR2632960, EP0940422-B1, EP0979851-B1 et EP1544232-B1. Ainsi les dit-brevets décrivent l'utilisation de polysiloxanes fonctionnalisés (méth)acrylates en tant qu'agents de revêtement anti-adhésif pouvant durcir sous l'effet d'un rayonnement. Le photoamorceur classiquement utilisé est l'Irgacure^{®} 1173 (anciennement Darocur^{®} 1173) de BASF. Le photoamorceur Tego^{®} A17 ou son successeur Tego^{®} A18 d'Evonik est utilisé pour les revêtements antiadhérents silicone comme décrit dans la brochure RC Newsletter N°2 de Septembre 2009 publié par Evonik Industries.

Les photoamorceurs les plus utilisés présentent le désavantage de libérer lors de la polymérisation et/ou réticulation sous rayonnement ultraviolet du benzaldéhyde suspecté CMR et/ou de l'isopropanol hautement inflammable.

Par ailleurs, le document EP006705 divulgue une composition silicone pour revêtement antiadhérent réticulable par une radiation ionisante ou non ionisante actinique, un procédé de production d'un article à revêtement siliconé antiadhésif, un article à revêtement antiadhésif et un stratifié.

L'objet de la présente invention se distinque de ce document par une composition silicone comprenant au moins une huile silicone fonctionnalisée acrylate et un photoamorceur de la famille des dérivés d'oxyde d'acylphosphine. Les effets amenés par ces caractéristiques distinctives sont notamment l'absence de dégagement de composés non souhaités comme le benzaldéhyde ou l'isopropanol, et l'obtention d'un article multicouche avec un revêtement silicone antiadhérent ayant un smear optimal, un rub off optimal, l'absence de démouillage et un taux d'extractibles satisfaisant.

Le document WO2013/013568 concerne des adhésifs organiques à base de monomères acryliques présentant des bonnes propriétés de transparence et de non-jaunissement. Ce document est silencieux quant aux propriétés des revêtements silicones antiadhérents (smear, rub-off, démouillage et taux d'extractibles) et quant aux propriétés antiadhésives d'un article multicouche.

Pour toutes ces raisons, les articles multicouches auto-adhésif mettant en oeuvre des revêtements silicones anti-adhérent par polymérisation radicalaire doivent être sans cesse améliorés.

Dans ce contexte, le premier objectif essentiel de la présente invention est de mettre au point un article multicouche auto-adhésif comprenant un revêtement silicone anti-adhérent qui n'emploie pas de photoamorceurs susceptibles de se transformer aisément en produit toxique ou inflammable et en particulier de dégager du benzaldéhyde ou de l'isopropanol. On souhaite obtenir des substrats revêtus qui ne présentent pas de problèmes de toxicité.

Le deuxième objectif essentiel de la présente invention est de fournir un article multicouche auto-adhésif mettant en oeuvre un revêtement silicone anti-adhérent qui présente des propriétés optimales en termes de taux d'extractibles, d'accrochage sur le support et d'anti adhérence vis-à-vis d'un adhésif.

Un autre objectif essentiel de cette invention est de fournir un procédé de préparation d'un article multicouche auto-adhésif conforme à l'invention.

Un autre objectif de cette invention est de fournir une composition silicone précurseur d'un revêtement silicone anti-adhérent conforme à l'invention et susceptible d'être utilisé dans un article multicouche auto-adhésif.

Le dernier objectif de l'invention concerne l'utilisation des objets conformes à l'invention dans des domaines clés de l'industrie.

Tous ces objectifs, parmi d'autres, sont atteints par la présente invention qui concerne un article multicouche auto-adhésif comprenant :
1) un support dorsal **DO** ayant une face de dessus **SI1** et une face de dessous **SI2,**
2) au moins une couche de revêtement silicone anti-adhérent **RC** appliquée sur la face de dessus **SI1** du support dorsal **DO** et qui est préparée par irradiation d'une composition silicone durcissable C ne contenant pas de solvant et comprenant comme constituants:
   a) au moins un organopolysiloxane fonctionnalisé **A** comprenant :
      a1) au moins un motif de formule **(I)** suivante :

         RₐZ_{b}SiO_{(4-a-b)/2} **(I)**

         formule dans laquelle :
         - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, ou un radical alkoxy -OR⁴ avec R⁴ étant un atome d'hydrogène ou un radical hydrocarboné comprenant de 1 à 10 atomes de carbone,
         - les symboles Z sont des radicaux monovalent de formule -y-(Y')ₙ dans laquelle :
            - y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
            - Y' représente un radical monovalent alcénylcarbonyloxy, et
            - n est égal à 1, 2 ou 3, et
               - a est un nombre entier égal à 0, 1 ou 2, b est un nombre entier égal à 1 ou 2 et la somme a+b= 1, 2 ou 3 ; et
      a2) éventuellement des motifs de formule **(II)** suivante:

         RₐSiO_{(4-a)/2} **(II)**

         formule dans laquelle :
         - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
         - a est un nombre entier égal à 0, 1, 2 ou 3, et
   b) une quantité efficace comprise entre 0,1 % et 5 % en poids par rapport au poids de l'organosiloxane ou de l'organopolysiloxane fonctionnalisé A d'au moins un photoamorceur **P** de type I de la famille
      des dérivés d'oxyde d'acylphosphine de formule **(III)** suivante: 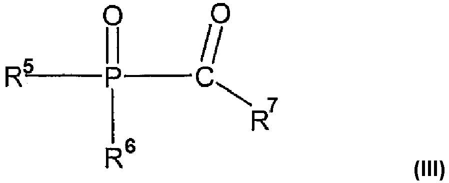 formule dans laquelle :
      - le symbole R⁵ est un radical monovalent -O-R⁸ avec le symbole R⁸ qui est un radical hydrocarboné comprenant de 1 à 8 atomes de carbone;
      - le symbole R⁶ est un radical phényle éventuellement substitué par :
         - un ou plusieurs atome(s) d'halogène,
         - un radical hydrocarboné comprenant de 1 à 8 atomes de carbone,
         - un radical alkoxy hydrocarboné comprenant de 1 à 8 atomes de carbone, et/ou
         - un radical thio hydrocarboné comprenant de 1 à 8 atomes de carbone; et
      - le symbole R⁷ représente un radical hydrocarboné comprenant de 1 à 12 atomes de carbone, un radical benzyle ou un radical phényle éventuellement substitué par un ou plusieurs atome(s) d'halogène, un radical hydrocarboné comprenant 1 à 8 atomes de carbone, un radical alkoxy hydrocarboné comprenant 1 à 8 atomes de carbone et/ou un radical cycloalkyle ;
3) au moins un adhésif sensible à la pression **PSA,** appliquée sur la couche de revêtement silicone anti-adhérent,
4) un support frontal **FR** appliquée sur l'adhésif -**PSA**- du composant 3), et
5) éventuellement au moins une couche de revêtement silicone anti-adhérent **RC** appliquée sur la face de dessous **SI2** du support dorsal **DO** et qui est préparée par application et irradiation de ladite composition silicone durcissable **C** et sur cette même couche on trouve au moins un adhésif sensible à la pression **PSA.**

Les composants 5) sont présents dans les articles auto-adhésifs et double-faces.

Dans ce contexte, l'article multicouche auto-adhésif selon l'invention présente simultanément les avantages suivants :
- lors de sa préparation, il n'y a pas de dégagement ni de benzaldéhyde ni d'isopropanol donc pas de risques d'hygiène et de sécurité pour les opérateurs ni de risques environnementaux
- le revêtement silicone présent dans l'article présente de bonnes propriétés en termes d'extractibles, d'accrochage et d'anti adhérence ; et
- l'article multicouche auto-adhésif est durable à savoir que ses propriétés sont conservées au stockage.

Il est du mérite des inventeurs d'avoir judicieusement sélectionné les constituants de la composition silicone durcissable **C** mise en œuvre dans la préparation de l'article selon l'invention et en particulier, ledit photoamorceur **P** selon l'invention qui permet de réaliser des revêtements anti-adhérents performants sur des supports polymère, notamment polyester, par exemple PET. Grâce à l'invention, lors de la préparation de la couche anti-adhérente en silicone, notamment par réticulation sous UV, ni benzaldéhyde, ni isopropanol ne sont libérés et les revêtements obtenus ont un excellent accrochage ("rub-off"), une force de décollement minimisée et de bonnes propriétés mécaniques et physiques.

De plus, le photoamorceur **P** selon l'invention (dérivés d'oxyde d'acylphosphine de formule **(III)**) présente l'avantage d'avoir aussi une bande d'absorption dans la zone de 350 à 420 nm, ce qui rend son utilisation très avantageuse dans le cas de réticulation UV via des lampes à diode électroluminescente, ou lampe à UV LED qui émettent des UV aux longueurs d'onde 365 nm et/ou 395 nm. L'acronyme « LED » est bien connu de l'homme du métier et est l'abrégé du terme anglais « Light-Emitting Diode ».

Les performances atteintes grâce au choix judicieux des composants de la composition silicone durcissable **C** en termes de qualité de la réticulation par polymérisation radicalaire: réactivité/niveau de réticulation/cinétique, sont tout à fait intéressantes, comme en témoigne les faibles taux d'extractibles obtenus.

Il est à noter que les propriétés d'accrochage sur support sont d'autant plus positives, qu'elles perdurent pendant de longues durées, par exemple au moins deux semaines, et ce même dans des conditions sévères, en particulier d'humidité et/ou de température.

Ces caractéristiques avantageuses sont particulièrement exploitables pour réaliser l'anti-adhérence de supports polymère, notamment polyester, par exemple PET, utiles comme "liners" d'étiquettes autocollantes (adhésif sensible à la pression), se présentant sous forme de rouleaux ou de bobines de films le plus souvent fabriqués à très grande vitesse.

Ceci est d'autant plus intéressant que ces résultats sont obtenus avec une composition silicone, dont le comportement rhéologique de la composition silicone n'est pas affecté par le type de photoamorceur. En effet, suivant les besoins la viscosité de la composition silicone durcissable C peut être modulée de sorte qu'elle est parfaitement apte à être enduite sur tout support et notamment sur tout support souple et qu'elle ne libère pas ni de benzaldéhyde ni d'isopropanol lors de la réticulation sous UV.

Selon un mode de réalisation particulier, l'invention concerne un article multicouche auto-adhésif comprenant :
1) un support dorsal **DO** ayant une face de dessus **SI1** et une face de dessous **SI2,**
2) au moins une couche de revêtement silicone anti-adhérent **RC** appliquée sur la face de dessus **SI1** du support dorsal **DO** et qui est préparée par irradiation d'une composition silicone durcissable C ne contenant pas de solvant et comprenant comme constituants:
   a) au moins un organopolysiloxane fonctionnalisé A comprenant :
      a1) au moins un motif de formule **(I)** suivante :

         RₐZ_{b}SiO_{(4-a-b)/2} **(I)**

         formule dans laquelle :
         - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, ou un radical alkoxy -OR⁴ avec R⁴ étant un atome d'hydrogène ou un radical hydrocarboné comprenant de 1 à 10 atomes de carbone,
         - les symboles Z sont des radicaux monovalent de formule -y-(Y')ₙ dans laquelle :
            - y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
            - Y' représente un radical monovalent alcénylcarbonyloxy, et
            - n est égal à 1, 2 ou 3, et
               - a est un nombre entier égal à 0, 1 ou 2, b est un nombre entier égal à 1 ou 2 et la somme a+b= 1, 2 ou 3 ; et
      a2) éventuellement des motifs de formule **(II)** suivante:

         RₐSiO_{(4-a)/2} **(II)**

         formule dans laquelle :
         - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
         - a est un nombre entier égal à 0, 1, 2 ou 3, et
   b) une quantité efficace comprise entre 0,1 % et 5 % en poids par rapport au poids de l'organosiloxane ou de l'organopolysiloxane fonctionnalisé A d'au moins un photoamorceur **P** de type I de la famille des dérivés d'oxyde d'acylphosphine de formule **(III)** suivante: 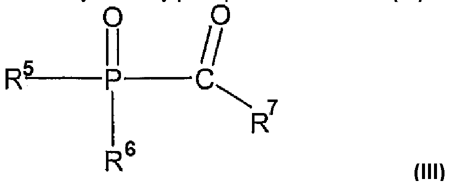 formule dans laquelle :
      - le symbole R⁵ est un radical monovalent -O-R⁸ avec le symbole R⁸ qui est un radical hydrocarboné comprenant de 1 à 8 atomes de carbone;
      - le symbole R⁶ est un radical phényle éventuellement substitué par :
         - un ou plusieurs atome(s) d'halogène,
         - un radical hydrocarboné comprenant de 1 à 8 atomes de carbone,
         - un radical alkoxy hydrocarboné comprenant de 1 à 8 atomes de carbone, et/ou
         - un radical thio hydrocarboné comprenant de 1 à 8 atomes de carbone; et
         - le symbole R⁷ représente un radical hydrocarboné comprenant de 1 à 12 atomes de carbone, un radical benzyle ou un radical phényle éventuellement substitué par un ou plusieurs atome(s) d'halogène, un radical hydrocarboné comprenant 1 à 8 atomes de carbone, un radical alkoxy hydrocarboné comprenant 1 à 8 atomes de carbone et/ou un radical cycloalkyle ;
3) au moins un adhésif sensible à la pression **PSA,** appliquée sur la couche de revêtement silicone anti-adhérent,
4) un support frontal **FR** appliquée sur l'adhésif **PSA-** du composant 3), et
5) au moins une couche de revêtement silicone anti-adhérent **RC** appliquée sur la face de dessous **SI2** du support dorsal **DO** et qui est préparée par application et irradiation de ladite composition silicone durcissable **C** et sur cette même couche on trouve au moins un adhésif sensible à la pression **PSA.**

Un autre objet de l'invention concerne un article multicouche auto-adhésif comprenant :
1) un support dorsal **DO** ayant une face de dessus **SI1** et une face de dessous **SI2,**
2) au moins une couche de revêtement silicone anti-adhérent **RC** appliquée sur la face de dessus **SI1** du support dorsal **DO** et qui est préparée par irradiation d'une composition silicone durcissable **C** ne contenant pas de solvant et comprenant comme constituants:
   a) au moins un organopolysiloxane fonctionnalisé **A** comprenant :
      a1) au moins un motif de formule **(I)** suivante :

         RₐZ_{b}SiO_{(4-a-b)/2} **(I)**

         formule dans laquelle :
         - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, ou un radical alkoxy -OR⁴ avec R⁴ étant un atome d'hydrogène ou un radical hydrocarboné comprenant de 1 à 10 atomes de carbone,
         - les symboles Z sont des radicaux monovalent de formule -y-(Y')ₙ dans laquelle :
            - y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
            - Y' représente un radical monovalent alcénylcarbonyloxy, et
            - n est égal à 1, 2 ou 3, et
               - a est un nombre entier égal à 0, 1 ou 2, b est un nombre entier égal à 1 ou 2 et la somme a+b= 1, 2 ou 3 ; et
      a2) éventuellement des motifs de formule **(II)** suivante:

         RₐSiO_{(4-a)/2} **(II)**

         formule dans laquelle :
         - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
         - a est un nombre entier égal à 0, 1, 2 ou 3, et
   b) une quantité efficace comprise entre 0,1 % et 5 % en poids par rapport au poids de l'organosiloxane ou de l'organopolysiloxane fonctionnalisé A d'au moins un photoamorceur P de type I de la famille des dérivés d'oxyde d'acylphosphine de formule **(III)** suivante: 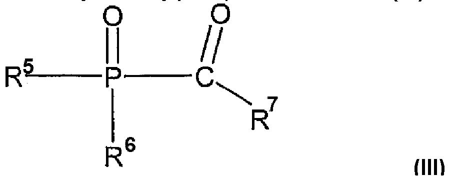 formule dans laquelle :
      - le symbole R⁵ est un radical monovalent -O-R⁸ avec le symbole R⁸ qui est un radical hydrocarboné comprenant de 1 à 8 atomes de carbone;
      - le symbole R⁶ est un radical phényle éventuellement substitué par :
         - un ou plusieurs atome(s) d'halogène,
         - un radical hydrocarboné comprenant de 1 à 8 atomes de carbone,
         - un radical alkoxy hydrocarboné comprenant de 1 à 8 atomes de carbone, et/ou
         - un radical thio hydrocarboné comprenant de 1 à 8 atomes de carbone; et
      - le symbole R⁷ représente un radical hydrocarboné comprenant de 1 à 12 atomes de carbone, un radical benzyle ou un radical phényle éventuellement substitué par un ou plusieurs atome(s) d'halogène, un radical hydrocarboné comprenant 1 à 8 atomes de carbone, un radical alkoxy hydrocarboné comprenant 1 à 8 atomes de carbone et/ou un radical cycloalkyle ;
3) au moins un adhésif sensible à la pression **PSA,** appliquée sur la face de dessous **SI2** du support dorsal **DO**

La quantité efficace de photoamorceur **P** est entre 0,1% et 5 % en poids par rapport au poids de l'organosiloxane ou de l'organopolysiloxane fonctionnalisé **A.**

Des exemples efficaces de photoamorceurs **P** sont ceux décrits dans la demande de brevet EP0007508. De préférence, le photoamorceur **P** est choisi dans le groupe constitué par les dérivés (noms chimiques en anglais): 2,2-dimethyl-propionyldiphenyl- phosphine oxide, 2,2-dimethyl-heptanoyl-diphenylphosphine oxide, 2,2-dimethyl-octanoyl-diphenylphosphine oxide, 2,2- dimethyl-nonanoyl-diphenylphosphine oxide, methyl 2,2- dimethyl-octanoyl-phenylphosphinate, 2-methyl-2-ethyl hexanoyl-diphenylphosphine oxide, 1-methyl-1-cyclohexanecarbonyl-diphenylphosphine oxide, 2,6-dimethylbenzoyl-diphenylphosphine oxide, 2,6-dimethoxybenzoyl-diphenylphosphine oxide, 2,6-dichlorobenzoyl-diphenylphosphine oxide, methyl 2,6 dimethoxybenzoyl-phenylphosphinate, 2,4,6-trimethylbenzoyl-diphenylphosphine oxide, methyl 2,4,6-trimethylbenzoylphenylphosphinate, 2,3,6-trimethylbenzoyldiphenylphosphine oxide, 2,3,5,6-tetramethylbenzoyl-diphenylphosphine oxide, 2,4,6-trimethoxybenzoyl-diphenylphosphine oxide, 2,4,6-trichlorobenzoyldiphenylphosphine oxide, 2-chloro-6-methyl-thio-benzoyl-diphenylphosphine oxide, methyl-2,4,6-trimethyl-benzoyl-naphthylphosphinate, 1,3-dimethoxynaphthalene-2-carbonyl-diphenylphosphine oxide et 2,8-dimethoxynaphthalene- 1-carbonyl-diphenylphosphine oxide,

Selon un mode particulièrement préféré, le photoamorceur **P** est l'éthyl(2,4,6-triméthylbenzoyl) phénylphosphinate (N° CAS 84434-11-7).

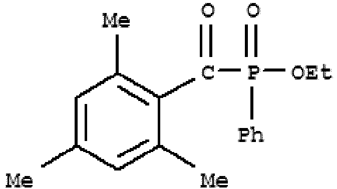

Selon un mode de réalisation préféré, on pourra associer au photoamorceur **P** un co-initiateur polymérique comme par exemple le Genopol-AB-1 (de la société Rhan) qui est un dérivé aminobenzoate polymérique. Les quantités seront dépendantes de la quantité de photoamorceur P utilisé (rapport massique photoamorceur P/coinitiateur compris entre 5:1 à 1:5).

Il est entendu que dans les formules **(I)** et **(II)** décrites ci-dessus pour l'organosiloxane ou l'organopolysiloxane fonctionnalisé **A,** si plusieurs radicaux R sont présents, ils peuvent être identiques ou différents les uns des autres. De plus, dans les formules **(I)** et **(II),** le symbole R peut avantageusement représenter un radical monovalent choisi dans le groupe constitué par : méthyle, éthyle, propyle, 3,3,3-trifluoropropyle, xylyle, tolyle et phényle.

L'organopolysiloxane **A** peut présenter une structure linéaire, ramifié, cycliques ou en réseau. Lorsqu'il s'agit d'organopolysiloxanes linéaires, ceux-ci peuvent être essentiellement constitués :
- de motifs siloxyles « D » choisi parmi les motifs de formules R₂SiO_{2/2}, RZSiO_{2/2} et Z₂SiO_{2/2};
- de motifs siloxyles « M » choisis parmi les motifs de formules R₃SiO_{1/2}, R₂ZSiO₁/2, RZ₂SiO_{1/2} et Z₃SiO_{1/2}, et
- les symboles R et Z sont tels que définis ci-dessus.

A titre d'exemples de motifs « D » non fonctionnalisé, on peut citer les motifs siloxyle diméthylsiloxy ou méthylphénylsiloxy et à titre d'exemple de motifs « M » non fonctionnalisé, on peut citer les motifs siloxyles triméthylsiloxy et diméthylphénylsiloxy.

Pour poursuivre la définition non limitative de l'organosiloxane ou l'organopolysiloxane fonctionnalisé **A,** on précise que pour le symbole Z des exemples de radicaux Y' alcénylcarbonyloxy, on peut citer l'acryloxy [CH₂=CH-CO-O-] et les radicaux méthacryloxy : [(CH₃)CH=CH-CO-O- ] et [CH₂=C(CH₃)-CO-O- ].

A titre d'illustration du symbole y, on mentionnera les radicaux :
- CH₂- ;
- (CH₂)₂- ;
- (CH₂)₃- ;
- CH₂-CH(CH₃)-CH₂- ;
- (CH₂)₃-NH-CH₂-CH₂- ;
- (CH₂)₃-OCH₂- ;
- (CH₂)₃-[O-CH₂-CH(CH₃)-] -;
- (CH₂)₃-O-CH₂₋CH(OH)( -CH₂-) ;
- (CH₂)₃-O-CH₂-C(CH₂-CH₃) [-(CH₂)₂-]₂ ;et
- (CH₂)₂-C₆H₉(OH) -

De préference, l'organosiloxane ou l'organopolysiloxane fonctionnalisé **A** a pour formule (**IV**) suivante: 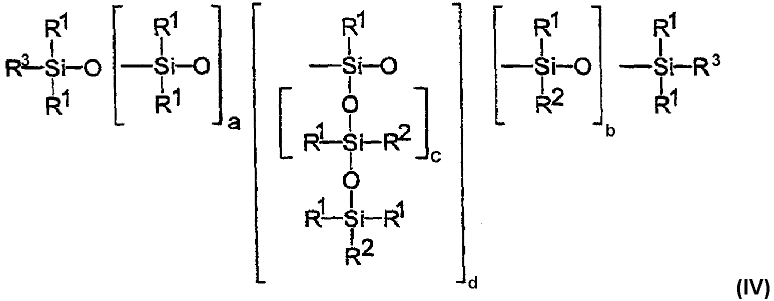 formule dans laquelle :
- les symboles R¹, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, ou un radical alkoxy -OR⁴ avec R⁴ étant un atome d'hydrogène ou un radical hydrocarboné comprenant de 1 à 10 atomes de carbone,
- les symboles R² et R³, identiques ou différents, représentent chacun soit un radical R¹ soit un radical monovalent de formule Z = -y-(Y')n dans laquelle :
   - y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
   - Y' représente un radical monovalent alcénylcarbonyloxy, et
   - n est égal à 1, 2 ou 3, et
- avec a = 0 à 1000, b = 0 à 500, c = 0 à 500, d = 0 à 500 et a+b+c+d= 0 à 2500, et
- la condition qu'au moins un symbole R² ou R³ représente le radical monovalent de formule Z.

Selon un mode de réalisation préféré, dans la formule **(IV)** ci-dessus : - c=0, d=0, a= 1 à 1000, b= 1 à 250, le symbole R² représente le radical monovalent de formule Z et les symboles R¹ et R³ ont la même signification que ci-dessus.

De manière encore plus préférentielle, dans la formule **(IV)** ci-dessus : - c=0, d=0, a= 1 à 500, b= 1 à 100, le symbole R² représente le radical monovalent de formule Z et les symboles R¹ et R³ ont la même signification que ci-dessus.

Ces organopolysiloxanes fonctionnalisés **A,** en particulier lorsqu'ils sont linéaires, peuvent être des huiles ayant une viscosité dynamique à 25°C comprise entre 1 mPa.s et 100 000 mPa.s, préférentiellement entre 5 mPa.s et 10 000 mPa.s et encore plus préférentiellement entre 10 mPa.s et 5000 mPa.s.

Selon un mode de réalisation particulièrement préféré, l'organopolysiloxane fonctionnalisé **A** est préférentiellement choisi de manière à ce que la composition silicone durcissable **C** présente avantageusement une viscosité ne dépassant pas 5000 mPa.s, de préférence ne dépassant pas 4000 mPa.s à 25°C. A titre de variante, on préférera les compositions dont la viscosité est comprise entre 200 et 1000 mPa.s à 25°C.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

La synthèse de l'organosiloxane ou l'organopolysiloxane fonctionnalisé **A** est décrite dans de nombreux brevets. Nous pouvons citer par exemple les brevets FR2362960, EP940422B1, EP979851B1, EP1276825B1, US3782940 et EP1544232B1.

Comme adhésif et notamment comme adhésif sensible à la pression **PSA** utile selon l'invention on peut utiliser n'importe quel adhésif sensible à la pression. On trouvera une description des adhésifs sensibles à la pression pouvant être utilisés dans Encyclopedia of Polymer Science and Engineering, vol. 13, Wiley-Interscience Publishers (New York, 1988). On trouvera une description supplémentaire d'adhésif sensible à la pression pouvant être utilisés dans Encyclopedia of Polymer Science and Technology, vol. 1, Interscience Publishers (New York, 1964). De façon générale, les PSA utilisés ici peuvent être l'un quelconque des PSA décrits dans les références susmentionnées. Selon un mode de réalisation de l'invention, les PSA comprennent des élastomères naturels ou synthétiques ou des adhésifs à base de matière acrylique. Des exemples sont décrits dans le brevet U.S. n° 5 164 444, le brevet U.S. n° 5 623 011 et le brevet U.S. n° 6,306,982. L'adhésif peut être aussi à base de caoutchouc, comme ceux décrits dans le brevet U.S n° 5 705 551 et en particulier en caoutchouc naturel. Il peut s'agir aussi d'un mélange durcissable par rayonnement de monomères avec des initiateurs et d'autres ingrédients, comme ceux décrits dans le brevet U.S. n° 5 232 958 et le brevet U.S. n° 5 232 958. Les adhésifs sensibles à la pression utiles selon l'invention sont de préférence en émulsion et thermofusibles. On peut utiliser des adhésifs sensibles à la pression usuels, y compris des adhésifs sensibles à la pression à base de silicone, des adhésifs sensibles à la pression à base de caoutchouc et des adhésifs sensibles à la pression à base de matière acrylique.

De préférence, l'adhésif sensible à la pression est un adhésif acrylique en émulsion aqueuse qui est composé d'homopolymères ou de copolymères acryliques en émulsion aqueuse. Il contient le plus souvent entre 40 et 60 % de matière sèche. Il possède des viscosités comprises entre 0,3 et 0,6 Pa.s. Il présente l'avantage de ne pas contenir de solvants organiques (non inflammable et pas d'évaporation de solvant nocif).

Les adhésifs sensibles à la pression à base acrylique conviennent particulièrement bien en termes de coût, de durabilité, de caractéristiques d'adhérence sensible à la pression, etc. Comme adhésifs acryliques sensibles à la pression, on peut mentionner ceux qui comprennent comme polymère de base un copolymère ou copolymère d'alkylester d'acide (méth)acrylique qui contient un groupe alkyle comptant de 4 à 12 atomes de carbone comme composant principal. Des exemples d'alkylester d'acide (méth)acrylique sont le (méth)acrylate de butyle, le (méth)acrylate d'isobutyle, le (méth)acrylate d'hexyle, le (méth)acrylate de 2-hexyle, le (méth)acrylate d'isononyle et le (méth)acrylate d'isodécyle. En plus du composant principal ci-dessus, le polymère de base peut être polymérisé avec des composants monomères, par exemple des alkylesters d'acide (méth)acrylique qui contiennent un groupe alkyle qui compte de 1 à 3 atomes de carbone, l'acide acrylique, l'acide méthacrylique, l'acétate de vinyle, l'acrylonitrile, le méthacrylonitrile et le styrène, selon les besoins. En outre, on peut formuler d'autres adhésifs sensibles à la pression avec différents additifs. Pour les adhésifs sensibles à la pression et à base acrylique, on peut ajouter des résines qui confèrent une adhérence au toucher, par exemple des résines de pétrole, des résines de terpène, des résines de colophane, des résines de coumarone-indène et des résines phénoliques, ainsi que des agents de réticulation tels que les agents de réticulation à base d'isocyanate et des agents de réticulation à base d'époxy. De plus, on peut avantageusement ajouter différents additifs, tels que des agents de stabilisation et des charges. Ils sont incolores et stables au stockage et au vieillissement (peu sensibles aux UV, et peu de sédimentation). Leurs natures légèrement polaires permettent un bon mouillage des surfaces à coller et ils possèdent de bonnes performances d'adhésion. Ce type d'adhésif est formulé par polymérisation en émulsion où l'on mélange en milieu aqueux un ou plusieurs monomères acryliques, un initiateur de réaction et un tensioactif pour stabiliser les micelles de l'émulsion. Comme initiateur de réaction, deux types sont très utilisés: thermique (péroxodisulfate de potassium ou d'ammonium) ou rédox (bisulfate). La quantité d'eau finale de l'émulsion varie entre 40 et 60 %. Lorsqu'il est appliqué sous la forme d'une émulsion aqueuse, l'adhésif est donc séché pour former une couche adhésive.

Des charges peuvent aussi être ajoutées aux adhésifs pour augmenter le volume de l'adhésif et/ou pour améliorer les propriétés. On utilise couramment des charges dans des formulations d'adhésif pour les principales raisons suivantes :
(1) pour réduire le coût, par exemple en ajoutant du carbonate de calcium, de l'argile ou du talc ;
(2) pour colorer les adhésifs, par exemple grâce à l'addition de dioxyde de titane, d'un toner en couleur et de marqueurs de sécurité ; et
(3) pour augmenter la performance, par exemple en augmentant la rigidité et la résistance à la rupture par traction, en réduisant l'écoulement à froid, en réduisant l'écoulement latéral, un découpage amélioré, etc.

On distingue les charges inertes non renforçantes des charges actives renforçantes :
- les charges inertes non renforçantes sont des charges qui ne réagissent pas avec l'adhésif comme par exemple : l'argile non traitée, le talc, le carbonate de calcium et le dioxyde de titane. Elles sont ajoutées à l'adhésif pour augmenter le volume de l'adhésif, réduire le coût ou modifier l'aspect ou la résistance chimique de l'adhésif.
- les charges actives renforçantes sont celles qui réagissent avec l'adhésif, par exemple en favorisant une réticulation supplémentaire ou une interaction interfaciale charge-polymère. Des exemples de telles charges comprennent l'argile traitée superficiellement, l'oxyde de zinc, de la silice ayant des particules fines et le noir de carbone. Cela permet une augmentation des propriétés mécaniques, comme la résistance à la rupture par traction ou le module et, le cas échéant, les propriétés adhésives.

Dans les applications de rubans, la couche d'adhésive peut être comprise entre quelques centaines de micromètres et quelques milliers de micromètres d'épaisseur.

Dans les applications étiquettes (généralement l'épaisseur de la couche adhésive est inférieure à 100 micromètres), des quantités importantes de charges causent toutefois une perte significative de la pégosité. Par conséquent, la quantité de charge utilisée pour cette application est plus limitée et sera choisi de manière judicieuse afin d'éviter cette problématique.

Comme exemple de support dorsal **DO** on peut utiliser des papiers, des films de résine synthétique, par exemple en polyéthylène, en polypropylène et en poly(téréphtalate) d'éthylène, des feuilles de caoutchouc, des tissus, des tissus non tissé, des treillis, des feuilles expansées, des films métalliques et leurs stratifiés.

Selon un mode de réalisation préféré, le support dorsal **DO** est choisi parmi le groupe constitué par : les films polymères et les papiers.

Comme exemples de supports dorsaux **DO** en papier utiles selon l'invention on peut citer : les papiers calandrés, les papiers couchés au kaolin et les papiers couchés au polyéthylène. En particulier, on peut aussi utiliser des matériaux cellulosiques similaires préparés par des procédés comme les procédés à la soude, au sulfite ou au sulfate (kraft), le procédé de cuisson au sulfure neutre, des procédés alcali-chlore, des procédés à l'acide nitrique, des procédés semi-chimiques et analogues. On peut citer comme exemples de papiers que l'on peut utiliser comme substrats pour préparer les stratifiés composites de la présente invention, des papiers kraft comme les papiers kraft blanchis de 40 livres et 50 livres, le papier kraft blanchi de qualité offset de 41 livres et analogues.

Comme autres exemples de supports dorsaux **DO,** on peut citer ceux en film polymère par exemple en : polymère vinylique, poly(chlorure de vinyle), polyester (par exemple en polyéthylène téréphtalate) et polyoléfine (polyéthylène tel que le LDPE, et polypropylène y compris le polypropylène orienté biaxialement), mais aussi des tissus non-tissé en polyester ou en fibres cellulosiques et des mousses en polyuréthane ou en polyéthylène.

Selon un mode de réalisation particulier, le support dorsal **DO** est choisi parmi le groupe constitué par des films en polyester et des papiers kraft. Comme exemple de papier kraft on peut citer le papier kraft supercalandré ou du papier cristal qui est aussi un papier kraft mais plus densifié.

Des exemples de supports frontaux **FR** sont, par exemple, les dérivés cellulosiques tels que des étiquettes, les feuilles métalliques, les polycarbonates ou les films en : polymère vinylique, poly(chlorure de vinyle), polyester (par exemple en polyéthylène téréphtalate) et polyoléfine (polyéthylène et polypropylène y compris le polypropylène orienté biaxialement).

Selon un mode de réalisation particulier, le support frontal **FR** est choisi parmi le groupe constitué par : les dérivés cellulosiques, tels que des étiquettes, les feuilles métalliques, les polycarbonates, les films en polyéthylène, les films en polyéthylène téréphtalate, les films en polypropylène et les films vinyliques.

Selon un mode de réalisation préféré, l'article multicouche auto-adhésif est caractérisé en ce qu'il s'agit d'une étiquette auto-adhésive ou d'un ruban auto-adhésif.

Un autre objet de l'invention concerne la composition silicone durcissable **C** telle que définie ci-dessus.

En particulier, l'invention concerne aussi une composition silicone durcissable **C** par irradiation, ne contenant pas de solvant et comprenant comme constituants:
a) au moins un organosiloxane ou un organopolysiloxane fonctionnalisé **A** comprenant :
   a1) au moins un motif de formule **(I)** suivante :

      RₐZ_{b}SiO_{(4-a-b)/2} **(I)**

      formule dans laquelle :
      - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, ou un radical alkoxy -OR⁴ avec R⁴ étant un atome d'hydrogène ou un radical hydrocarboné comprenant de 1 à 10 atomes de carbone,
      - les symboles Z sont des radicaux monovalent de formule -y-(Y')ₙ dans laquelle :
         - y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
         - Y' représente un radical monovalent alcénylcarbonyloxy, et
         - n est égal à 1, 2 ou 3, et
      - a est un nombre entier égal à 0, 1 ou 2, b est un nombre entier égal à 1 ou 2 et la somme a+b= 1, 2 ou 3 ; et
   a2) éventuellement des motifs de formule **(II)** suivante:

      RₐSiO_{(4-a)/2} **(II)**

      formule dans laquelle :
      - les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
      - a est un nombre entier égal à 0, 1, 2 ou 3, et
b) une quantité efficace d'au moins un photoamorceur **P** de type I de la famille des dérivés d'oxyde d'acylphosphine de formule **(III)** suivante: 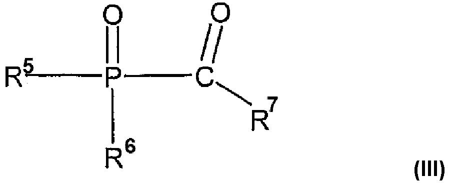 formule dans laquelle :
   - le symbole R⁵ est un radical monovalent -O-R⁸ avec le symbole R⁸ qui est un radical hydrocarboné comprenant de 1 à 8 atomes de carbone;
   - le symbole R⁶ est un radical phényle éventuellement substitué par :
      - un ou plusieurs atome(s) d'halogène,
      - un radical hydrocarboné comprenant de 1 à 8 atomes de carbone,
      - un radical alkoxy hydrocarboné comprenant de 1 à 8 atomes de carbone, et/ou
      - un radical thio hydrocarboné comprenant de 1 à 8 atomes de carbone; et
   - le symbole R⁷ représente un radical hydrocarboné comprenant de 1 à 12 atomes de carbone, un radical benzyle ou un radical phényle éventuellement substitué par un ou plusieurs atome(s) d'halogène, un radical hydrocarboné comprenant 1 à 8 atomes de carbone, un radical alkoxy hydrocarboné comprenant 1 à 8 atomes de carbone et/ou un radical cycloalkyle.

Comme indiqué ci-dessus, le photoamorceur **P** préféré est l'éthyl (2,4,6-triméthylbenzoyl) phénylphosphinate.

Les compositions silicones durcissable **C** par irradiation mises en oeuvre selon l'invention peuvent comporter en outre d'autres ingrédients tels que des modulateurs d'adhérence permettant d'augmenter ou de diminuer les forces d'adhérence obtenues à partir du polyorganosiloxane seul, des pigments, des photosensibilisateurs, des agents fongicides, bactéricides et antimicrobiens, des inhibiteurs de corrosion, etc.

Un autre objet de l'invention concerne un procédé de préparation d'un article multicouche auto-adhésif selon l'invention et tel que défini ci-dessus comprenant les étapes a) à d) suivantes :
a) une composition **C** selon l'invention et telle que définie ci-dessus est préparée par mélange de ses constituants ;
b) entre 0,1 et 5 g par m² de la composition **C** obtenue à l'étape précédente est appliquée sur la face de dessus **SI1** d'un support dorsal **DO** afin d'obtenir le support dorsal **DO** enduit de la composition **C,**
c) puis le support dorsal **DO** enduit de la composition **C** est soumis à un rayonnement ultraviolet afin de faire durcir par polymérisation et/ou réticulation la composition **C** permettant d'obtenir une couche de revêtement silicone anti-adhérent **RC,** et
d) on effectue une étape d1) ou d2) :
   d1) au moins un adhésif sensible à la pression **PSA,** est appliquée sur la couche de revêtement silicone anti-adhérent **RC,** puis un support frontal **FR** est appliquée sur l'adhésif **PSA,**
   d2) une construction adhésive **AD** est préparée en appliquant sur un support frontal **FR** au moins un adhésif sensible à la pression **PSA,** puis la construction adhésive **AD** est jointe avec le support dorsal **DO** enduit de la composition **C** préparé à l'étape c) de manière à ce que l'adhésif **PSA** soit située entre le support dorsal **DO** et le support frontal **FR,** et
e) éventuellement la composition **C** obtenue à l'étape a) est aussi appliquée sur la face de dessous **SI2** du support dorsal **DO** puis est soumis à un rayonnement ultraviolet afin de faire durcir par polymérisation et/ou réticulation la composition **C** permettant d'obtenir une couche de revêtement silicone anti-adhérent **RC** sur la face de dessous **SI2** du support dorsal **DO,** et ensuite au moins un adhésif sensible à la pression **PSA,** est appliquée sur cette même couche de revêtement silicone anti-adhérent **RC.**

Selon une variante avantageuse de l'invention, le procédé selon l'invention est caractérisé en ce qu'à l'étape d) et/ou e) un adhésif sensible à la pression **PSA,** est appliqué sous la forme d'une émulsion aqueuse puis est séchée.

Les quantités de la composition **C** selon l'invention déposées sur les supports sont variables et sont comprises le plus souvent entre 0,1 et 5 g par m² de surface traitée. Ces quantités dépendent de la nature des supports et des propriétés anti-adhérentes recherchées. Elles sont plus souvent comprises entre 0,3 et 1,5 g/m² pour des supports non poreux.

De préférence lors de l'étape a) du procédé selon l'invention, la quantité efficace de photoamorceur **P** est comprise entre 0,1% et 5% en poids par rapport au poids de l'organosiloxane ou de l'organopolysiloxane fonctionnalisé **A,** et de préférence comprise entre 0,1 et 3% en poids par rapport au poids de l'organosiloxane ou de l'organopolysiloxane fonctionnalisé **A.**

Le rayonnement U.V. utilisé présente une longueur d'onde comprise entre 100 et 400 nanomètres. La durée d'irradiation peut être courte et elle est généralement inférieure à 1 seconde et est de l'ordre de quelques centièmes de seconde pour les très faibles épaisseurs de compositions déposées sur les surfaces. La réticulation s'effectue avantageusement en l'absence de tout chauffage. Toutefois, un chauffage entre 25 et 100°C n'est pas exclu de l'invention.

De plus, on peut régler le temps de durcissement notamment, par le nombre de lampes U.V. utilisées, par la durée d'exposition aux U.V. et par la distance entre la composition et la lampe U.V.

Selon un mode de réalisation avantageux, des lampes UV LED sont utilisées (émissions d'UV à 365, 375, 385 et/ou 395 nm ).

On peut effectuer la réticulation, qui se traduit par un durcissement de la composition silicone durcissable **C,** de manière continue en faisant passer le support revêtu de la composition à travers un équipement d'irradiation qui est conçu pour assurer au support revêtu un temps de séjour suffisant pour achever le durcissement du revêtement. On doit généralement effectuer le durcissement en présence de la plus petite concentration d'oxygène possible, classiquement à une concentration d'oxygène de moins de 100 ppm, et de préférence de moins de 50 ppm. On effectue généralement le durcissement dans une atmosphère inerte, par exemple d'azote ou d'argon. Le temps d'exposition nécessaire pour durcir la composition silicone durcissable **C** varie avec des facteurs comme :
- la formulation particulière utilisée, le type et la longueur d'onde du rayonnement,
- le débit de dose, le flux énergétique,
- la concentration de photoinitiateur, et
- l'atmosphère et l'épaisseur du revêtement.

Pour le durcissement par les rayons ultraviolets une dose de rayons ultraviolets située dans l'intervalle allant d'environ 0,1 à environ 0,5 joule est généralement suffisante. Le temps d'exposition est généralement très bref et le durcissement est effectué en un temps allant d'environ 0,1 à environ 3 secondes. Le temps d'exposition réel nécessaire pour obtenir un durcissement approprié pourra être facilement déterminé par l'homme de l'art.

Les compositions sont appliquées à l'aide de dispositifs aptes à déposer, d'une façon uniforme, de faibles quantités de liquides. On peut utiliser à cet effet par exemple le dispositif nommé "Helio glissant" comportant en particulier deux cylindres superposés; le rôle du cylindre placé le plus bas, plongeant dans le bac d'enduction où se trouve la composition, est d'imprégner en une couche très mince le cylindre placé le plus haut, le rôle de ce dernier est alors de déposer sur le support les quantités désirées de composition dont il est imprégné; un tel dosage est obtenu par réglage de la vitesse respective des deux cylindres qui tournent en sens inverse l'un de l'autre. On peut aussi utiliser toute autre technique connue par l'homme du métier telle que : le couchage au rideau, l'enduction au pinceau, la pulvérisation, l'enduction par rouleaux inversés, l'enduction à la racle,...

Selon un mode de réalisation préféré, le procédé selon l'invention est caractérisé en ce qu'à l'étape c) le rayonnement ultraviolet à une longueur d'onde comprise entre 100 à 400 nanomètres bornes incluses.

Un autre objet de l'invention concerne un substrat au moins partiellement revêtu d'un revêtement anti-adhérent préparé par application de la composition silicone durcissable **C** selon l'invention et telle que définie ci-dessus et irradiation par un rayonnement ultraviolet de manière à provoquer sa réticulation.

Un autre objet de l'invention concerne l'utilisation d'un substrat au moins partiellement revêtu d'un revêtement anti-adhérent selon l'invention et tel que défini ci-dessus dans le domaine des étiquettes autoadhésives, des bandes incluant les enveloppes, des arts graphiques, des soins médicaux et hygiène et de la construction et isolation.

Enfin le dernier objet de l'invention concerne l'utilisation d'un article multicouche auto-adhésif selon l'invention et tel que défini ci-dessus ou de la composition silicone durcissable **C** par irradiation selon l'invention et telle que définie ci-dessus dans le domaine des étiquettes autoadhésives, des bandes incluant les enveloppes, des arts graphiques, des soins médicaux et hygiène et de la construction et isolation.

Selon une variante de l'invention, lorsque que le terme « comprenant » est utilisé pour décrire les articles multicouches auto-adhésifs, les procédés et les compositions silicones selon l'invention, il peut être remplacé par le terme « constitué de » sans dénaturer le sens de l'invention.

Les exemples et tests suivants sont donnés à titre illustratif et non limitatif. Ils permettent notamment de mieux comprendre l'invention et de faire ressortir tous ses avantages et entrevoir quelques variantes de réalisation.

### EXEMPLE

Les compositions sont préparées par mélange d'une ou plusieurs huiles silicones **A** suivant la formule **(IV)** décrite ci-dessus et d'un photoamorceur **P** dont les structures sont détaillées ci-dessous.

**Tableau 1 : Structures des organopolysiloxanes fonctionnalisés acryloxy**

| **Composé A** | **R¹** | **R²** | **R³** | **a** | **b** | **d** | **c** |
|---|---|---|---|---|---|---|---|
| **A1** | **CH₃** | 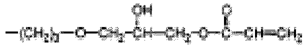 | **CH₃** | **85** | **7** | **0** | **0** |
| **A2** | **CH₃** | 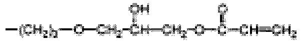 | **CH₃** | **220** | **4** | **0** | **0** |
| **A3** | **CH₃** | 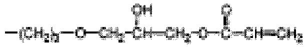 | **CH₃** | **16** | **5** | **0** | **0** |
| **A4** | **CH₃** | 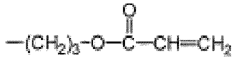 | 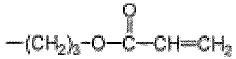 | **90** | **4** | **0** | **0** |
| **A5** | **CH₃** | Pas présent dans la formule | 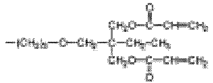 | **80** | **0** | **0** | **0** |

**Tableau 2 : Photoamorceurs**

| Photoamorceurs | Structures |
|---|---|
| P1 = Irgacure^{®} 1173 de BASF | 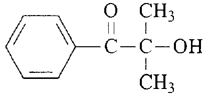 |
| P2 = Tego^{®} A18 d'Evonik | |
| P3 = (éthyl(2,4,6-triméthylbenzoyl) phénylphosphinate) | 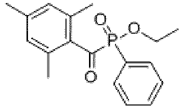 |
| N° CAS 84434-11-7 | |

### Procédé d'enduction

Les compositions silicone sont enduites à l'aide d'un pilote d'enduction Rotomec sur différent supports (Polyester ou polypropylène). La vitesse machine est de 50 ou 100 m/min avec une puissance de lampe à mercure fixée à 100W/cm pour effectuer la réticulation sous UV. Ce dépôt est contrôlé par mesure XRF. En sortie machine, les tests réalisés sont le « smear », le « rub-off », le « démouillage » et la mesure d'extractibles silicones.

**Tests effectués sur les supports enduits de revêtements silicone anti-adhérent:**
**Dépôt** : Contrôle du dépôt silicone enduit sur la surface par analyse par Fluorescence X du silicium (Lab-X 3000 d'Oxford). Un tube à rayon X excite la couche électronique des atomes de silicium, ce qui provoque une émission de rayons X proportionnelle à la quantité de silicium excité. Cette valeur ou nombre de coups est transformée par calcul (en utilisant la droite d'étalonnage) en quantité de silicone.
**Smear** : Contrôle qualitatif de la polymérisation de surface par la méthode de la trace au doigt qui consiste à :
   - Disposer de l'échantillon de support enduit de silicone à contrôler sur une surface plane et rigide ;
   - Faire une trace avec le bout du doigt en appuyant modérément mais nettement ; et
   - Examiner à l'oeil la trace ainsi faite, de préférence en lumière rasante. On peut voir ainsi la présence d'une trace même très légère par la différence de brillance de la surface.

L'appréciation est qualitative. On quantifie le « Smear » avec les notations suivantes :
A : très bon, pas de trace au doigt
B : un peu moins bon, trace à peine visible
C : trace nette
D : trace très nette et aspect huileux de la surface, produit à peine polymérisé.
soit un note de A à D, du meilleur résultat au plus mauvais.

**Rub-off** : Contrôle de l'aptitude du silicone à adhérer sur le support flexible par gommage en aller-retour au doigt qui consiste à :
- Disposer l'échantillon de support enduit de silicone à contrôler sur une surface plane et rigide, la silicone étant sur la face supérieure
- Faire 10 Aller et Retour avec le bout du doigt (sur une longueur de 10 cm environ) en appuyant modérément mais nettement.
- Examiner à l'œil l'apparition du gommage. Le gommage correspond à l'apparition d'une fine poudre blanche ou des petites boulettes qui roulent sous le doigt.

L'appréciation est qualitative. On quantifie le gommage avec les notations suivantes :
- 10 : très bon, pas d'apparition de gommage au bout de 10 A-R
- 1 : très mauvais, gommage dès le premier aller

La note correspond au nombre d'aller-retour (de 1 à 10) à partir duquel un gommage apparaît.

Soit une note de 1 à 10, du plus faible au meilleur résultat.

**Démouillage** : Appréciation du degré de polymérisation de la couche silicone par évaluation du transfert de silicone sur un adhésif mis en contact avec l'enduction à l'aide d'une encre de tension de surface normée. La méthode est la suivante :
- Sélectionner un échantillon d'environ 20 x 5 cm du papier enduit silicone à caractériser, pris dans le sens du déroulement (sens machine).
- Découper une longueur de ≈ 15 cm de ruban adhésif, puis le déposer côté adhésif sur le papier à contrôler, sans plis, en exerçant 10 fois une pression par glissement du doigt sur la longueur du ruban adhésif. (Ruban adhésif « Scotch » de 3 M, référence 610, largeur : 25 mm).
- Enlever le ruban adhésif et le déposer à plat, partie adhésivée vers le haut.
- Déposer sur la partie adhésivée du ruban, avec un coton tige (à usage unique), une trace d'encre sur une longueur d'environ 10 cm (encres de marque SHERMAN ou FERARINI et BENELI de tension de surface ≈ 30 dynes/cm et de viscosité 2 à 4 mPa/s). Déclencher immédiatement le chronomètre.
- On considère que l'on entre dans la phase du phénomène de démouillage lorsque le trait d'encre change d'aspect, arrêter alors le chronomètre.
- La dépose de l'encre sur la partie adhésivée du ruban doit se faire dans les 2 minutes suivant l'enduction silicone.
- Si le résultat obtenu est < 10 secondes, on estime qu'il y a migration de silicone sur l'adhésif, et que la polymérisation n'est pas complète.
- On donnera une note de 0 à 10 correspondant au temps écoulé en seconde avant l'observation du phénomène de démouillage.
- Si le résultat obtenu est 10 secondes, on estime que la polymérisation est complète. Dans ce cas, on donnera une note de 10 signifiant que le résultat est très bon.
- Noter la note obtenue et l'encre utilisée (nom, marque, tension de surface, viscosité).

**Extractibles** : Mesure de la quantité de silicone qui n'est pas greffée au réseau formé lors de la polymérisation. Ces silicones sont extraits du film par immersion d'échantillon dès la sortie machine dans la MIBK durant 24h minimum. Ceci est mesuré par spectroscopie à absorption de flamme.

### Préparation d'articles multicouches auto-adhésifs

Des supports adhésivés normés TESA7475 (support= PET - adhésif = acrylique) et TESA4651 (support= toile enduite acrylique - adhésif = caoutchouc naturel) sont complexés sur le liner silicone produit ci-dessus (=support enduit d'un revêtement silicone obtenu par réticulation sous UV) afin de former un article multicouche. Des essais de tractions sont réalisés afin de déterminer les forces de décollement avant et après vieillissement ainsi que les valeurs d'adhésion subséquente et de loop-tack. Ces tests sont décrits ci-après.

### Test effectué sur les articles multicouches obtenus

**Adhésion subséquente ou « Subsequent adhesion » (« SubAd » dans les tableaux):** Mesure de vérification de la conservation d'adhésivité des adhésifs (TESA 7475) ayant été en contact avec le revêtement silicone selon le test FINAT 11 (FTM 11) connu de l'homme de l'art. Ici l'éprouvette de référence est du PET et les adhésifs sont restés en contact avec la surface silicone à tester 1 jour à 70°C et 7 jours à 70°C.

Les résultats s'expriment en % de conservation de force adhésive du ruban de référence : CA = (Fm2/Fm1) x 100 en %
avec :
Fm2 = Moyenne forces décollement ruban après contact 20 h avec support siliconé ; et
Fm1 = Moyenne forces décollement ruban sans contact avec support siliconé.

**Loop-tack** : Le test de loop-tack consiste en la détermination de la force nécessaire pour séparer, à 300 mm/min, une boucle d'adhésif (TESA 7475) mise en contact et sans pression avec un matériau standard. Le rapport de résultat entre un adhésif propre et un adhésif complexé 1 jour à 23°C permet d'apprécier la perte d'adhésivité selon le test FINAT 9 (FTM9) connu de l'homme de l'art.

Le résultat final sera la moyenne des trois mesures exprimées en N/Inch (unité : 1 inch = 2,54 cm).

**Release** : Les mesures de forces de pelage ont été effectuées avec les adhésifs normés TESA 4651 et TESA 7475. Les éprouvettes de l'article multicouche (adhésif en contact avec surface silicone) ont été conservées 1 jour à 23°C, 1 jour à 70°C et 7 jours à 70°C dans les conditions de pression requises, puis testées à faible vitesse de pelage selon le test FINAT 3 (FTM 3) connu de l'homme de l'art.

La force de décollement s'exprime en cN/inch et se mesure à l'aide d'un dynamomètre, après mise sous pression des échantillons soit à température ambiante (23°C) soit à plus haute température pour des tests de vieillissement accéléré (en général 70°C).

Les résultats sont consignés dans le Tableau 3 ci-dessous.

**Tableau 3 : Résultats de l'évaluation des articles multicouches. Revêtements obtenus à partir d'huile silicone à fonctions acrylates pendantes.**

| **Article** | Exemple comparatif 1 | Exemple comparatif 2 | Exemple 1 (invention) |
|---|---|---|---|
| **Composition** | | | |
| **A1** | 100 | 100 | 100 |
| **P1** | 1 | | |
| **P2** | | 1 | |
| **P3** | | | 1 |

| **Support** | **Film Polyester Lumirror** | | |
|---|---|---|---|
| | **Vitesse 100m/mn** | | |
| | **Lampe 100W/cm** | | |
| **Dépôt** (g/m²) | 1,07 | 1,09 | 1,05 |
| **sous produit de réaction: benzaldéhyde** | **oui** | non | non |
| **sous produit de réaction: isopropanol** | **oui** | **oui** | non |

| **Caractérisation du revêtement** | | | |
|---|---|---|---|
| **Smear** | A | A | A |
| **Rub-off** | 10 | 10 | 10 |
| **Démouillage** | 10 | 10 | 10 |
| **Extractibles (100 cm²)** (%) | 3,05 | 3,42 | 3,45 |

| **Caractérisation de l'article multicouche** | | | |
|---|---|---|---|
| **SubAd 1d@70°C (réf TESA 7475)** | 1,0 | 1,0 | 1,0 |
| **SubAd 1d@70°C** (%) | 90 | 89 | 89 |
| **SubAd 7d@70°C (réf TESA 7475)** | 0,94 | 1,01 | 0,98 |
| **SubAd 7d@70°C** (%) | 94 | 100 | 97 |
| **Loop tack** (N) selon FINAT3 (1d@23°C) | 23,8 | 25,1 | 22,5 |
| **Loop tack** (%) selon FINAT3 (1d@23°C) | 111 | 117 | 105 |

| **Release Tesa 7475** | | | |
|---|---|---|---|
| 1d @ 23°C | 8,6 | 8,7 | **8,4** |
| 1d @ 70°C | 11,73 | 10,37 | **10,23** |
| 7d @70°C | 16,43 | 12,56 | **12,38** |

| **Release Tesa 4651** | | | |
|---|---|---|---|
| 1d @ 23°C | 26,9 | 28,1 | **25,9** |
| 1d @ 70°C | 43,1 | 35,4 | **32,2** |
| 7d @70°C | 70,1 | 70,3 | **71,7** |

Contrairement aux essais comparatifs 1 et 2, l'exemple 1 selon l'invention ne présente pas de dégagement de benzaldéhyde ou d'isopropanol lors de la réticulation sous UV de la composition silicone enduite sur un film polyester, la réticulation du revêtement est optimale et les forces de pelage de l'adhésif de l'article multicouche sont satisfaisantes même après vieillissement.

**Tableau 4. Revêtements obtenus à partir d'une huile silicone à fonctions acrylates pendantes ou d'un mélange de 2 huiles silicone à fonctions acrylates pendantes - taux variables de photoamorceurs.**

| **Article** | **Exemples selon l'invention** | | | | | | | | | |
|---|---|---|---|---|---|---|---|---|---|---|
| **Composition** | **Ex.3** | **Ex.4** | **Ex.5** | **Ex.6** | **Ex.7** | **Ex.9** | **Ex.10** | **Ex.11** | **Ex.12** | **Ex.13** |
| **A1** | 100 | 100 | 99 | 99 | 97,5 | 97,5 | 97,5 | 95 | 95 | 95 |
| **A2** | - | - | 1 | 1 | **2,5** | **2,5** | **2,5** | **5** | **5** | **5** |
| **P3** | **2** | **4** | 2 | 4 | 1 | **2** | **4** | 1 | **2** | **4** |

| **Support** | **Film OPP CR30 (Innovia)** | | | | | | | | | |
|---|---|---|---|---|---|---|---|---|---|---|
| | **Vitesse 50m/mn** | | | | | | | | | |
| | **Lampe 100W/cm** | | | | | | | | | |
| **Dépôt** (g/m²) | 1,01 | 0,94 | 0,97 | 0,86 | 0,93 | 1,09 | 0,91 | 0,90 | 0,85 | 0,89 |
| **Caractérisation du revêtement RC** | | | | | | | | | | |
| **Smear** | A | A | A | A | A | A | A | A | A | A |
| **Rub-off @ 0d** | 10 | 10 | 10 | 10 | 10 | 10 | 10 | 10 | 10 | 10 |
| **Rub-off @ 7d** | 10 | 10 | 10 | 10 | 10 | 10 | 10 | 10 | 10 | 10 |
| **Extractions (%)** | 3,8 | 3,8 | 3,7 | 5,1 | 5,4 | 5,2 | 5,0 | 4,2 | 4,7 | 4,8 |

| **Caractérisation de l'article multicouche** | | | | | | | | | | |
|---|---|---|---|---|---|---|---|---|---|---|
| **Subadhesion 1d@23° (ref Tesa7475)** | 0,95 | 0,94 | 0,88 | 0,97 | 0,93 | 0,94 | 0,98 | 0,92 | 0,9 | 0,9 |
| **Subadhesion 1d@23°C (%)** | 99,0 | 97,9 | 91,7 | 101,0 | 96,9 | 97,9 | 102,1 | 95,8 | 93,8 | 93,8 |

| **Release TESA7475** | | | | | | | | | | |
|---|---|---|---|---|---|---|---|---|---|---|
| 1d @ 23°C | 3,8 | 4,7 | 3,6 | 4,5 | 2,9 | 3,6 | 4,7 | 2,9 | 3,5 | 5,3 |
| 1d @ 70°C | 5,3 | 7,4 | 5,3 | 7,5 | 4,0 | 5,1 | 7,6 | 4,0 | 5,6 | 8,8 |
| 7d @70°C | 7,5 | 27,8 | 7,7 | 9,3 | 5,9 | 7,0 | 9,9 | 6,0 | 8,3 | 11,6 |

| **Release TESA4651** | | | | | | | | | | |
|---|---|---|---|---|---|---|---|---|---|---|
| 1d @ 23°C | 10,1 | 13,4 | 8,3 | 11,5 | 6,1 | 7,4 | 12,2 | 5,6 | 7,4 | 12,9 |
| 1d @ 70°C | 17,8 | 26,9 | 13,4 | 23,2 | 9,3 | 12,7 | 23,8 | 9,3 | 13,7 | 28,2 |
| 7d @70°C | 22,2 | 39,3 | 17,8 | 29,1 | 14,5 | 15,7 | 31,0 | 14,0 | 17,4 | 36,4 |

Tous les exemples selon l'invention ne présentent pas de dégagement de benzaldéhyde et /ou d'isopropanol lors de la réticulation sous UV des compositions silicone à base d'une huile à fonctions acrylates selon l'invention ou du mélange de deux huiles à fonctions acrylates selon l'invention enduites sur un film polypropylène. De plus la réticulation des revêtements est optimale et les forces de pelage de l'adhésif des articles multicouches sont correctes et cela quelle que soit la concentration en photoamorceur.

**Tableau 5. Revêtements obtenus à partir d'un mélange de deux huiles silicone à fonctions acrylates respectivement pendantes et bouts de chaine:**

| **Article** | Exemple comparatif 3 | Exemple 14 |
|---|---|---|
| **Composition** | | |
| **A3** | 30 | 30 |
| **A5** | 70 | 70 |
| **P2** | **2** | |
| **P3** | | **2** |

| **Support** | **Film PET Lumirror** | |
|---|---|---|
| | **Vitesse 50m/mn** | |
| | **Lampe 100W/cm** | |
| **Dépôt** (g/m²) | 0,75 | 0,73 |
| **sous-produit de réaction: benzaldehyde** | non | non |
| **sous-produit de réaction: isopropanol** | **oui** | non |

| **Caractérisation du revêtement RC** | | |
|---|---|---|
| **Smear** | **B** | A |
| **Rub-off** | **2** | 10 |
| **Démouillage** | **0** | 10 |
| **Extractibles (100 cm²)** (%) | **17,4** | 7,3 |

| **Caractérisation de l'article multicouche** | | |
|---|---|---|
| **SubAd 1d@70°C (réf TESA 7475)** | ND | 0,9 |
| **SubAd 1d@70°C** (%) | ND | 84,9 |
| **SubAd 7d@70°C (réf TESA 7475)** | ND | 0,92 |
| **SubAd 7d@70°C** (%) | ND | 85,44 |
| **Loop tack** (N) selon FINAT3 (1d@23°C) | ND | 20,8 |
| **Loop tack** (%) selon FINAT3 (1d@23°C) | ND | 75,9 |

| **Release Tesa 7475** | | |
|---|---|---|
| 1d @ 23°C | ND | 6,52 |
| 1d @ 70°C | ND | 7,9 |
| 7d @70°C | ND | 20,2 |

| **Release Tesa 4651** | | |
|---|---|---|
| 1d @ 23°C | ND | 13,69 |
| 1d @ 70°C | ND | 11,5 |
| 7d @70°C | ND | 11,94 |

| | | |
|---|---|---|
| *ND= non déterminé car taux extractibles élevé* | | |

Contrairement à l'exemple comparatif 3, l'exemple 14 selon l'invention ne présente pas de dégagement de benzaldéhyde ou d'isopropanol lors de la réticulation sous UV de la composition silicone à base de deux huiles silicone à fonctions acrylates selon l'invention enduite sur un film polyester. De plus la réticulation du revêtement et les forces de pelage de l'adhésif de l'article multicouche sont correctes.

Le photoamorceur utilisé dans l'exemple comparatif 3 ne permet pas une réticulation satisfaisante de la composition à base de deux huiles silicone à fonctions acrylates respectivement pendantes et bouts de chaine (taux d'extractibles de 17,4%).

**Tableau 6. Revêtements obtenus à partir d'mélange d'une huile silicone à fonctions acrylates pendantes et d'une huile silicone à fonctions acrylates bouts de chaine et pendantes.**

| **Article** | **Exemple 15 Invention** |
|---|---|
| **Composition** | |
| **A3** | 30 |
| **A4** | 70 |
| **P3** | 2 |

| **Support** | **Film PET Lumirror** |
|---|---|
| | **Vitesse 50m/mn** |
| | **Lampe 100W/cm** |
| **Caractérisation du revêtement RC** | |
| **Dépôt** (g/m²) | 0,74 |
| **Smear** | A |
| **Rub-off** | 10 |
| **Extractibles (100 cm²)** valeur dosage | 3,6 |
| **Extractibles (100 cm²)** (%) | 6,5 |

| **Caractérisation de l'article multicouche** | |
|---|---|
| **Subadhesion 1d@70°c (ref Tesa 7475)** | 0,85 |
| **Subadhesion 1d@70°c (%)** | 79,73 |
| **Subadhesion 7d@70°c (ref Tesa 7475)** | 0,89 |
| **Subadhesion 7d@70°c (%)** | 82,91 |
| **Loop tack** (N) selon FINAT3 (1d@23°C) | 19,42 |
| **Loop tack** (%) selon FINAT3 (1d@23°C) | 70,90 |

| **Release TESA 7475** | |
|---|---|
| 1d @ 23°C | 7,685 |
| 1d @ 70°C | 7,885 |
| 7d @70°C | 16,365 |

| **Release TESA 4651** | |
|---|---|
| 1d @ 23°C | 10,155 |
| 1d @ 70°C | 10,6 |
| 7d @70°C | 36,18 |

L'exemple 15 selon l'invention ne présente pas de dégagement de benzaldéhyde et /ou d'isopropanol lors de la réticulation sous UV d'une composition comprenant un mélange d'une huile silicone à fonctions acrylates uniquement pendantes et d'une huile silicone à fonctions acrylates pendantes et bouts de chaine.

De plus la réticulation du revêtement et les forces de pelage de l'adhésif de l'article multicouche sont correctes.

L'ensemble de ces exemples montre clairement que l'utilisation d'un photoamorceur de type oxyde d'acylphosphine et plus particulièrement l'éthyl(2,4,6-triméthylbenzoyl)-phénylphosphinate lors de la fabrication d'un article multicouche auto-adhésif permet d'une part de protéger les opérateurs et l'environnement et d'autre part de conduire à des propriétés optimales quelle que soit les huiles silicones acrylates utilisées dans la composition silicone mise en œuvre ce qui n'est pas le cas des photoamorceurs les plus utilisés industriellement.

## Revendications

1. - Article multicouche auto-adhésif comprenant :
1) un support dorsal **DO** ayant une face de dessus **SI1** et une face de dessous **SI2,**
2) au moins une couche de revêtement silicone anti-adhérent **RC** appliquée sur la face de dessus **SI1** du support dorsal **DO** et qui est préparée par irradiation d'une composition silicone durcissable **C** ne contenant pas de solvant et comprenant comme constituants:
a) au moins un organopolysiloxane fonctionnalisé **A** comprenant :
a1) au moins un motif de formule **(I)** suivante :
RₐZ_{b}SiO_{(4-a-b)/2} **(I)**
formule dans laquelle :
- les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, ou un radical alkoxy -OR⁴ avec R⁴ étant un atome d'hydrogène ou un radical hydrocarboné comprenant de 1 à 10 atomes de carbone,
- les symboles Z sont des radicaux monovalent de formule -y-(Y')ₙ dans laquelle :
• y représente un radical polyvalent alkylène linéaire ou ramifié en C₁-C₁₈ éventuellement prolongé par des radicaux bivalents oxyalkylène ou polyoxyalkylène en C₁ à C₄ éventuellement substitué par un radical hydroxy,
• Y' représente un radical monovalent alcénylcarbonyloxy, et
• n est égal à 1, 2 ou 3, et
- a est un nombre entier égal à 0, 1 ou 2, b est un nombre entier égal à 1 ou 2 et la somme a+b= 1, 2 ou 3 ; et
a2) éventuellement des motifs de formule **(II)** suivante:
RₐSiO_{(4-a)/2} **(II)**
formule dans laquelle :
- les symboles R, identiques ou différents, représentent chacun un groupe alkyle en C₁ à C₁₈ linéaire ou ramifié, un groupe aryle ou aralkyle en C₆ à C₁₂, éventuellement substitué, de préférence par des atomes d'halogène, et
- a est un nombre entier égal à 0, 1, 2 ou 3, et
b) une quantité efficace comprise entre 0,1% et 5% en poids par rapport au poids de l'organosiloxane ou de l'organopolysiloxane fonctionnalisé **A** d'au moins un photoamorceur **P** de type I de la famille des dérivés d'oxyde d'acylphosphine de formule **(III)** suivante: 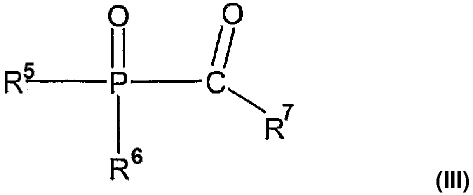 formule dans laquelle :
- le symbole R⁵ est un radical monovalent -O-R⁸ avec le symbole R⁸ qui est un radical hydrocarboné comprenant de 1 à 8 atomes de carbone;
- le symbole R⁶ est un radical phényle éventuellement substitué par :
- un ou plusieurs atome(s) d'halogène,
- un radical hydrocarboné comprenant de 1 à 8 atomes de carbone,
- un radical alkoxy hydrocarboné comprenant de 1 à 8 atomes de carbone, et/ou
- un radical thio hydrocarboné comprenant de 1 à 8 atomes de carbone ; et
- le symbole R⁷ représente un radical hydrocarboné comprenant de 1 à 12 atomes de carbone, un radical benzyle ou un radical phényle éventuellement substitué par un ou plusieurs atome(s) d'halogène, un radical hydrocarboné comprenant 1 à 8 atomes de carbone, un radical alkoxy hydrocarboné comprenant 1 à 8 atomes de carbone et/ou un radical cycloalkyle ;
3) au moins un adhésif sensible à la pression **PSA,** appliquée sur la couche de revêtement silicone anti-adhérent,
4) un support frontal **FR** appliquée sur l'adhésif **PSA** du composant 3), et
5) éventuellement au moins une couche de revêtement silicone anti-adhérent **RC** appliquée sur la face de dessous **SI2** du support dorsal **DO** et qui est préparée par application et irradiation de ladite composition silicone durcissable **C** et sur cette même couche on trouve au moins un adhésif sensible à la pression **PSA.**

2. - Article multicouche auto-adhésif selon la revendication 1 **caractérisé en ce que** le support dorsal **DO** est choisi parmi le groupe constitué par : les films polymères et les papiers.

3. - Article multicouche auto-adhésif selon la revendication 1 **caractérisé en ce que** le support frontal **FR** est choisi parmi le groupe constitué par : les dérivés cellulosiques, les feuilles métalliques, les polycarbonates, les films en polyéthylène, les films en polyéthylène téréphtalate, les films en polypropylène et les films vinyliques.

4. - Article multicouche auto-adhésif selon la revendication 1 **caractérisé en ce que** la quantité efficace de photoamorceur **P** est comprise entre 0,1 et 3% en poids par rapport au poids de l'organosiloxane ou de l'organopolysiloxane fonctionnalisé **A.**

5. - Article multicouche auto-adhésif selon la revendication 1 ou 3 **caractérisé en ce que** le photoamorceur **P** est l'éthyl(2,4,6-triméthylbenzoyl)phénylphosphinate.

6. - Article multicouche auto-adhésif selon l'une quelconque des revendications précédentes **caractérisé en ce qu'**il s'agit d'une étiquette auto-adhésive ou d'un ruban auto-adhésif.

7. - Procédé de préparation d'un article multicouche auto-adhésif tel que défini selon l'une quelconque des revendications 1 à 5 comprenant les étapes a) à d) suivantes :
a) une composition **C** telle que définie selon la revendication 1 ou 4 est préparée par mélange de ses constituants ;
b) entre 0,1 et 5 g par m² de la composition **C** obtenue à l'étape précédente est appliquée sur la face de dessus **SI1** d'un support dorsal **DO** afin d'obtenir le support dorsal **DO** enduit de la composition **C,**
c) puis le support dorsal **DO** enduit de la composition **C** est soumis à un rayonnement ultraviolet afin de faire durcir par polymérisation et/ou réticulation la composition **C** permettant d'obtenir une couche de revêtement silicone anti-adhérent **RC,** et
d) on effectue une étape d1) ou d2) :
d1) au moins un adhésif sensible à la pression **PSA,** est appliquée sur la couche de revêtement silicone anti-adhérent **RC,** puis un support frontal **FR** est appliquée sur l'adhésif **PSA,**
d2) une construction adhésive **AD** est préparée en appliquant sur un support frontal **FR** au moins un adhésif sensible à la pression **PSA,** puis la construction adhésive **AD** est jointe avec le support dorsal **DO** enduit de la composition **C** préparé à l'étape c) de manière à ce que l'adhésif **PSA** soit située entre le support dorsal **DO** et le support frontal **FR,** et
e) éventuellement la composition **C** obtenue à l'étape a) est aussi appliquée sur la face de dessous **SI2** du support dorsal **DO** puis est soumis à un rayonnement ultraviolet afin de faire durcir par polymérisation et/ou réticulation la composition **C** permettant d'obtenir une couche de revêtement silicone anti-adhérent **RC** sur la face de dessous **SI2** du support dorsal **DO,** et ensuite au moins un adhésif sensible à la pression **PSA,** est appliquée sur cette même couche de revêtement silicone anti-adhérent **RC.**

8. - Procédé selon la revendication 7 **caractérisé en ce qu'**à l'étape d) et/ou e) un adhésif sensible à la pression **PSA,** est appliqué sous la forme d'une émulsion aqueuse puis est séchée.

9. - Procédé selon la revendication 8 **caractérisé en ce qu'**à l'étape c) le rayonnement ultraviolet à une longueur d'onde comprise entre 100 à 400 nanomètres bornes incluses.

10. - Un substrat au moins partiellement revêtu d'un revêtement anti-adhérent préparé par application de la composition silicone durcissable **C** telle que définie selon l'une quelconque des revendications 1 à 6 et irradiation par un rayonnement ultraviolet de manière à provoquer sa réticulation.

11. - Utilisation d'un article multicouche auto-adhésif tel que défini selon l'une quelconque des revendications 1 à 6 dans le domaine des étiquettes autoadhésives, des bandes incluant les enveloppes, des arts graphiques, des soins médicaux et hygiène et de la construction et isolation.

12. - Utilisation d'un substrat au moins partiellement revêtu d'un revêtement anti-adhérent tel que défini selon la revendication 10 dans le domaine des étiquettes autoadhésives, des bandes incluant les enveloppes, des arts graphiques, des soins médicaux et hygiène et de la construction et isolation.

## Patentansprüche

1. Selbstklebender mehrlagiger Artikel, der Folgendes umfasst:
1) einen Rückseitenträger DO mit einer Oberseite SI1 und einer Unterseite SI2,
2) mindestens eine Silicon-Antihaftbeschichtung RC, die auf die Oberseite SI1 des Rückseitenträgers DO aufgetragen ist und die durch Bestrahlung einer härtbaren Siliconzusammensetzung C hergestellt wird, die kein Lösungsmittel enthält und als Bestandteile Folgendes umfasst:
a) mindestens ein funktionalisiertes Organopolysiloxan A, das Folgendes umfasst:
a1) mindestens eine Repetiereinheit der folgenden
Formel (I): RₐZ_{b}SiO_{(4-a-b)/2} (I),
wobei in der Formel:
- die Symbole R, die gleich oder verschieden sind, jeweils für eine geradkettige oder verzweigte C₁- bis C₁₈-Alkylgruppe, eine C₆- bis C₁₂-Aryl- oder -Aralkylgruppe, die gegebenenfalls, vorzugsweise durch Halogenatome, substituiert ist, oder einen Alkoxyrest -OR⁴ stehen, wobei R⁴ ein Wasserstoffatom oder ein 1 bis 10 Kohlenstoffatome umfassender Kohlenwasserstoffrest ist,
- die Symbole Z einwertige Reste der Formel -y-(Y')ₙ sind, wobei:
• y für einen geradkettigen oder verzweigten mehrwertigen C₁-C₁₈-Alkylenrest steht, der gegebenenfalls durch zweiwertige C₁- bis C₄-Oxyalkylen- oder - Polyoxyalkylenreste verlängert ist, die gegebenenfalls durch einen Hydroxyrest substituiert sind,
• Y' für einen einwertigen Alkenylcarbonyloxy-Rest steht und
• n gleich 1, 2 oder 3 ist und
- a eine ganze Zahl gleich 0, 1 oder 2 ist, b eine ganze Zahl gleich 1 oder 2 ist und die Summe a+b = 1, 2 oder 3; und
a2) gegebenenfalls Repetiereinheiten der folgenden
Formel (II): RₐSiO_{(4-a)/2} (II),
wobei in der Formel:
- die Symbole R, die gleich oder verschieden sind, jeweils für eine geradkettige oder verzweigte C₁- bis C₁₈-Alkylgruppe, eine C₆- bis C₁₂-Aryl- oder -Aralkylgruppe stehen, die gegebenenfalls, vorzugsweise durch Halogenatome, substituiert ist, und
- a eine ganze Zahl gleich 0, 1, 2 oder 3 ist und
b) eine wirksame Menge zwischen 0,1 Gew.-% und 5 Gew.- %, bezogen auf das Gewicht des funktionalisierten Organosiloxans oder Organopolysiloxans A, mindestens eines Photoinitiators P vom Typ I der Familie von Acylphosphinoxid-Derivaten der folgenden Formel (III): 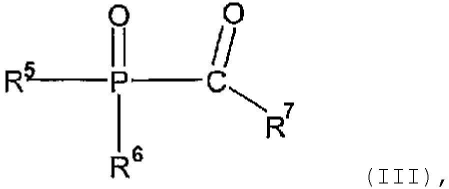 wobei in der Formel:
- das Symbol R⁵ ein einwertiger -O-R⁸-Rest mit dem Symbol R⁸ ist, bei dem es sich um einen 1 bis 8 Kohlenstoffatome umfassenden Kohlenwasserstoffrest handelt;
- das Symbol R⁶ ein Phenylrest ist, der gegebenenfalls durch Folgendes substituiert ist:
- ein oder mehrere Halogenatome,
- einen 1 bis 8 Kohlenstoffatome umfassenden Kohlenwasserstoffrest,
- einen 1 bis 8 Kohlenstoffatome umfassenden Alkoxykohlenwasserstoffrest und/oder
- einen 1 bis 8 Kohlenstoffatome umfassenden Thiokohlenwasserstoffrest und
- das Symbol R⁷ für einen 1 bis 12 Kohlenstoffatome umfassenden Kohlenwasserstoffrest, einen Benzylrest oder einen Phenylrest, der gegebenenfalls durch ein oder mehrere Halogenatome substituiert ist, einen 1 bis 8 Kohlenstoffatome umfassenden Kohlenwasserstoffrest, einen 1 bis 8 Kohlenstoffatome umfassenden Alkoxykohlenwasserstoffrest und/oder einen Cycloalkylrest steht;
3) mindestens einen Haftklebstoff PSA, der auf die Silicon-Antihaftbeschichtung aufgetragen ist,
4) einen vorderen Träger FR, der auf den Klebstoff PSA von Komponente 3) aufgetragen ist, und
5) gegebenenfalls mindestens eine Silicon-Antihaftbeschichtung RC, die auf die Unterseite SI2 des Rückseitenträgers DO aufgetragen ist und die durch Auftragen und Bestrahlen der härtbaren Siliconzusammensetzung C hergestellt wird, und wobei sich auf dieser Lage mindestens ein Haftklebstoff PSA befindet.

2. Selbstklebender mehrlagiger Artikel nach Anspruch 1, **dadurch gekennzeichnet, dass** der Rückseitenträger DO ausgewählt ist aus der Gruppe bestehend aus: Polymerfolien und Papieren.

3. Selbstklebender mehrlagiger Artikel nach Anspruch 1, **dadurch gekennzeichnet, dass** der vordere Träger FR ausgewählt ist aus der Gruppe bestehend aus: Cellulosederivaten, Metallfolien, Polycarbonaten, Polyethylenfolien, Polyethylenterephthalat-Folien, Polypropylenfolien und Vinylfolien.

4. Selbstklebender mehrlagiger Artikel nach Anspruch 1, **dadurch gekennzeichnet, dass** die wirksame Menge des Photoinitiators P zwischen 0,1 und 3 Gew.-%, bezogen auf das Gewicht des funktionalisierten Organosiloxans oder Organopolysiloxans A, beträgt.

5. Selbstklebender mehrlagiger Artikel nach Anspruch 1 oder 3, **dadurch gekennzeichnet, dass** es sich beim Photoinitiator P um Ethyl(2,4,6-trimethylbenzoyl)phenylphosphinat handelt.

6. Selbstklebender mehrlagiger Artikel nach einem der vorhergehenden Ansprüche, **dadurch gekennzeichnet, dass** es sich um ein Selbstklebeetikett oder ein Selbstklebeband handelt.

7. Verfahren zur Herstellung eines selbstklebenden mehrlagigen Artikels gemäß der Definition in einem der Ansprüche 1 bis 5, das die folgenden Schritte a) bis d) umfasst:
a) das Herstellen einer Zusammensetzung C gemäß der Definition in einem der Ansprüche 1 oder 4 durch das Mischen ihrer Bestandteile;
b) das Auftragen von 0,1 bis 5 g/m² der im vorhergehenden Schritt erhaltenen Zusammensetzung C auf die Oberseite SI1 eines Rückseitenträgers DO zum Erhalt des mit Zusammensetzung C beschichteten Rückseitenträgers DO,
c) dann das Exponieren des mit Zusammensetzung C beschichteten Rückseitenträgers DO gegenüber einer Ultraviolettstrahlung zum Härten der Zusammensetzung C durch Polymerisation und/oder Vernetzung, wodurch der Erhalt einer Silicon-Antihaftbeschichtung RC ermöglicht wird, und
d) das Durchführen eines Schritts d1) oder d2):
d1) das Auftragen mindestens eines Haftklebstoffs PSA auf die Silicon-Antihaftbeschichtung RC, dann das Auftragen eines vorderen Trägers FR auf den Klebstoff PSA,
d2) das Herstellen eines Klebstoffaufbaus AD durch das Auftragen mindestens eines Haftklebstoffs PSA auf einen vorderen Träger FR, dann das Zusammenfügen des Klebstoffaufbaus AD mit dem Rückseitenträger DO, der mit der in Schritt c) hergestellten Zusammensetzung C beschichtet ist, sodass sich der Klebstoff PSA zwischen dem Rückseitenträger DO und dem vorderen Träger FR befindet, und
e) gegebenenfalls auch das Auftragen der in Schritt a) erhaltenen Zusammensetzung C auf die Unterseite SI2 des Rückseitenträgers DO, dann das Exponieren gegenüber einer Ultraviolettstrahlung, um die Zusammensetzung C durch Polymerisation und/oder Vernetzung zu härten, wodurch der Erhalt einer Silicon-Antihaftbeschichtung RC auf der Unterseite SI2 des Rückseitenträgers DO ermöglicht wird, und anschließend das Auftragen mindestens eines Haftklebstoffs PSA auf diese Silicon-Antihaftbeschichtung RC.

8. Verfahren nach Anspruch 7, **dadurch gekennzeichnet, dass** in Schritt d) und/oder e) ein Haftklebstoff PSA in Form einer wässrigen Emulsion aufgetragen wird, die anschließend getrocknet wird.

9. Verfahren nach Anspruch 8, **dadurch gekennzeichnet, dass** in Schritt c) die Ultraviolettstrahlung eine Wellenlänge zwischen 100 und 400 Nanometer aufweist, Grenzwerte eingeschlossen.

10. Substrat, das zumindest teilweise mit einer Antihaftbeschichtung beschichtet ist, die durch das Auftragen der härtbaren Siliconzusammensetzung C gemäß der Definition nach einem der Ansprüche 1 bis 6 und das Bestrahlen mit einer Ultraviolettstrahlung zum Herbeiführen ihrer Vernetzung hergestellt wird.

11. Verwendung eines selbstklebenden mehrlagigen Artikels gemäß der Definition in einem der Ansprüche 1 bis 6 auf dem Gebiet der Selbstklebeetiketten, der Bänder einschließlich der Umschläge, der Grafik, der medizinischen Behandlung und der hygienischen Pflege und des Baus und der Isolierung.

12. Verwendung eines Substrats, das zumindest teilweise mit einer Antihaftbeschichtung gemäß der Definition in Anspruch 10 beschichtet ist, auf dem Gebiet der Selbstklebeetiketten, der Bänder einschließlich der Umschläge, der Grafik, der medizinischen Behandlung und der hygienischen Pflege und des Baus und der Isolierung.

## Claims

1. Self-adhesive multi-layer item comprising:
1) a dorsal support DO having a top face SI1 and a bottom face SI2,
2) at least one layer of silicone release coating RC applied on the top face SI1 of the dorsal support DO and which is prepared by irradiation of a curable silicone composition C not containing any solvent and comprising, as constituents:
a) at least one functionalized organopolysiloxane A comprising:
a1) at least one unit of formula (I) below:
RₐZ_{b}SiO_{(4-a-b)/2} (I)
in which formula:
- the symbols R, which may be identical or different, each represent a linear or branched C₁ to C₁₈ alkyl group, a C₆ to C₁₂ aryl or aralkyl group, which is optionally substituted, preferably with halogen atoms, or an alkoxy radical -OR⁴ with R⁴ being a hydrogen atom or a hydrocarbon-based radical comprising from 1 to 10 carbon atoms,
- the symbols Z are monovalent radicals of formula - y-(Y')ₙ in which:
• y represents a linear or branched C₁-C₁₈ polyvalent alkylene radical optionally extended by C₁ to C₄ oxyalkylene or polyoxyalkylene divalent radicals, which is optionally substituted with a hydroxyl radical,
• Y' represents an alkenylcarbonyloxy monovalent radical, and
• n is equal to 1, 2 or 3, and
- a is an integer equal to 0, 1 or 2, b is an integer equal to 1 or 2 and the sum a+b = 1, 2 or 3; and
a2) optionally units of formula (II) below:
RₐSiO_{(4-a)/2} (II)
in which formula:
- the symbols R, which may be identical or different, each represent a linear or branched C₁ to C₁₈ alkyl group, a C₆ to C₁₂ aryl or aralkyl group, which is optionally substituted, preferably with halogen atoms, and
- a is an integer equal to 0, 1, 2 or 3, and
b) an effective amount of between 0.1% and 5% by weight relative to the weight of the functionalized organosiloxane or organopolysiloxane A of at least one type I photoinitiator P of the family of acylphosphine oxide derivatives of formula (III) below: 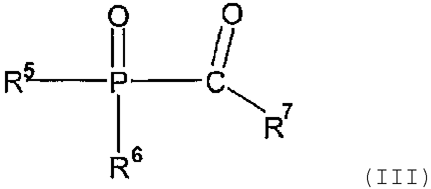 in which formula:
- the symbol R⁵ is a monovalent radical -O-R⁸ with the symbol R⁸ being a hydrocarbon-based radical comprising from 1 to 8 carbon atoms;
- the symbol R⁶ is a phenyl radical optionally substituted with:
- one or more halogen atom(s),
- a hydrocarbon-based radical comprising from 1 to 8 carbon atoms,
- a hydrocarbon-based alkoxy radical comprising from 1 to 8 carbon atoms, and/or
- a hydrocarbon-based thio radical comprising from 1 to 8 carbon atoms; and
- the symbol R⁷ represents a hydrocarbon-based radical comprising from 1 to 12 carbon atoms, a benzyl radical or a phenyl radical optionally substituted with one or more halogen atom(s), a hydrocarbon-based radical comprising from 1 to 8 carbon atoms, a hydrocarbon-based alkoxy radical comprising from 1 to 8 carbon atoms and/or a cycloalkyl radical;
3) at least one pressure-sensitive adhesive PSA, applied on the layer of silicone release coating,
4) a frontal support FR applied on the adhesive PSA of the component 3), and
5) optionally at least one layer of silicone release coating RC applied on the bottom face SI2 of the dorsal support DO and which is prepared by application and irradiation of said curable silicone composition C, and on this same layer there is at least one pressure-sensitive adhesive PSA.

2. Self-adhesive multi-layer item according to Claim 1, **characterized in that** the dorsal support DO is chosen from the group made up of: polymer films and papers.

3. Self-adhesive multi-layer item according to Claim 1, **characterized in that** the frontal support FR is chosen from the group made up of: cellulose-based derivatives, metal sheets, polycarbonates, polyethylene films, polyethylene terephthalate films, polypropylene films and vinyl films.

4. Self-adhesive multi-layer item according to Claim 1, **characterized in that** the effective amount of photoinitiator P is between 0.1% and 3% by weight relative to the weight of the functionalized organosiloxane or organopolysiloxane A.

5. Self-adhesive multi-layer item according to Claim 1 or 3, **characterized in that** the photoinitiator P is ethyl (2,4,6-trimethylbenzoyl)phenylphosphinate.

6. Self-adhesive multi-layer item according to any one of the preceding claims, **characterized in that** it is a self-adhesive label or a self-adhesive tape.

7. Process for preparing a self-adhesive multi-layer item as defined in any one of Claims 1 to 5, comprising the following steps a) to d):
a) a composition C as defined in Claim 1 or 4 is prepared by mixing its constituents;
b) between 0.1 and 5 g per m² of the composition C obtained in the preceding step is applied on the top face SI1 of a dorsal support DO in order to obtain the dorsal support DO coated with the composition C,
c) the dorsal support DO coated with the composition C is then subjected to ultraviolet radiation in order to cure, by polymerization and/or crosslinking, the composition C making it possible to obtain a layer of silicone release coating RC, and
d) a step d1) or d2) is carried out:
d1) at least one pressure-sensitive adhesive PSA is applied on the layer of silicone release coating RC, and then a frontal support FR is applied on the adhesive PSA,
d2) an adhesive construction AD is prepared by applying, on a frontal support FR, at least one pressure-sensitive adhesive PSA, and then the adhesive construction AD is joined with the dorsal support DO coated with the composition C prepared in step c) in such a way that the adhesive PSA is located between the dorsal support DO and the frontal support FR, and
e) optionally, the composition C obtained in step a) is also applied on the bottom face SI2 of the dorsal support DO and is then subjected to ultraviolet radiation in order to cure, by polymerization and/or crosslinking, the composition C making it possible to obtain a layer of silicone release coating RC on the bottom face SI2 of the dorsal support DO, and subsequently at least one pressure-sensitive adhesive PSA is applied on this same layer of silicone release coating RC.

8. Process according to Claim 7, **characterized in that**, in step d) and/or e), a pressure-sensitive adhesive PSA is applied in the form of an aqueous emulsion and is then dried.

9. Process according to Claim 8, **characterized in that**, in step c), the ultraviolet radiation has a wavelength of between 100 and 400 nanometres, limits included.

10. Substrate at least partially coated with a release coating prepared by application of the curable silicone composition C as defined in any one of Claims 1 to 6 and irradiation by ultraviolet radiation so as to bring about the crosslinking thereof.

11. Use of a self-adhesive multi-layer item as defined in any one of Claims 1 to 6 in the field of self-adhesive labels, of bands including envelopes, of graphic arts, of medical and hygiene care and of construction and insulation.

12. Use of a substrate at least partially coated with a release coating as defined in Claim 10 in the field of self-adhesive labels, of bands including envelopes, of graphic arts, of medical and hygiene care and of construction and insulation.
